# EUROPEAN PATENT SPECIFICATION

(11) **EP 4 313 534 B1**
(45) Date of publication and mention of the grant of the patent: **08.04.2026**
(21) Application number: 22741598.1
(22) Date of filing: 02.06.2022
(51) Int. Cl.: B29C 37/02, A61C 7/00, A61C 13/00, B29C 64/245, B29C 64/35, B33Y 40/00, B33Y 80/00, B29C 33/38, B29C 51/30, B33Y 40/20

(54) **SYSTEMS AND METHODS FOR MAKING POLYMER DENTAL APPLIANCES**
SYSTEME UND VERFAHREN ZUR HERSTELLUNG VON POLYMER-DENTALGERÄTEN
SYSTEMES ET PROCEDES DE FABRICATION D'APPAREILS DENTAIRES EN POLYMERE

(30) Priority: 09.06.2021 US 202163208742 P; 30.09.2021 US 202163250380 P
(43) Date of publication of application: 07.02.2024
(73) Proprietor: Carbon, Inc., Redwood City, California 94063 (US)
(72) Inventor: SWARUP, Keshav, San Mateo, California 94401 (US); ROBBINS, Gregory Robert, Redwood City, California 94061 (US); FELLER, Bob E., San Mateo, California 94401 (US); DENMARK, Alexander D., Redwood City, California 94061 (US); LU, Owen, San Mateo, California 94401 (US)
(74) Representative: HGF
(86) International application number: PCT/US2022/031907
(87) International publication number: WO 2022/260921

(56) References cited:
- WO-A1-2020/157598
- DE-A1- 102018 119 027
- US-A- 5 482 659
- US-A1- 2018 304 541
- US-A1- 2019 255 774
- US-A1- 2020 086 568
- US-A1- 2020 306 017
- US-A1- 2020 324 479
- US-A1- 2021 086 450

## Description

### Field

Disclosed are methods and systems for making polymer dental appliances such as dental aligners by thermoforming polymer sheets on additively manufactured molds. Methods of cleaning and further curing interior surfaces of hollow molds are also described but not claimed.

### Background

Polymer dental appliances such as clear aligners are made by additively manufacturing a mold in the shape of a patient's dental arch, and then thermoforming a sheet of thermoplastic material over that mold. *See, e.g.,* US Patent No 7,261,533. Prior to thermoforming, it is important that residual resin be cleaned from all surfaces of the molds-typically accomplished by washing the molds with ethanol (See, e.g., Van Esbroek, Sharma, Lam and Chin, Method and apparatus for forming an orthodontic aligner, US Patent No. 10,575,925; *see also* Graham, Laaker and Barth, Rapid Wash System for Additive Manufacturing, US Patent Application Pub. No. US 2019/0255774).

A problem with washing, however, is that it produces contaminated wash liquids which present further processing problems. A possible alternative is centrifugal cleaning, which has been generally described for additive manufactured objects (Murillo and Dachs, Resin extractor for additive manufacturing, US Patent App. Pub. No. 2021/0086450 (March 25, 2021); Hiatt et al., Method for removing and reclaiming unconsolidated material from substrates following fabrication of objects thereon by programmed material consolidation techniques, US Patent App. Pub. No. 2004/0159340 (Aug. 19, 2004); and Converse et al., Systems and methods for resin recovery in additive manufacturing, PCT Patent App. Pub. No. WO 2020/146000 (July 16, 2020)).

US2020/0306017 discloses a support coupled to an appliance to decrease warpage. The support may comprise a plurality of extensions coupled to the appliance to decrease warpage. The extensions can be coupled to the appliance at one or more of many locations, such as on an occlusal surface, a wall, an edge or an interior of the appliance. In some examples, the extensions are coupled to walls of the appliance such as a buccal wall and a lingual wall, and the extensions can be coupled to the walls of the appliance near edges of the walls, such as a gingivally facing edges of the walls that are oriented toward the gingiva when the appliance is worn.

US2019/0255774 discloses a dental model, including (a) an upper segment, said upper segment having a shape corresponding to at least a portion of a dental arch of a human patient; (b) a base segment having an external surface and a bottom surface; (c) at least one internal cavity formed in said base segment, and optionally said upper segment, said at least one internal cavity extending through said bottom surface; and (d) at least one wash channel extending from said external surface of said base segment through said base segment and into said at least one internal cavity.

Another problem with additively manufactured thermoforming molds is that the molds themselves are typically discarded. This represents considerable waste of material, and hence it is also desirable to minimize the amount of material from which the mold is made. This might be achievable by making hollow molds. However, centrifugal cleaning hollow molds appears difficult, as the hollow cavities themselves, in addition to the outer surfaces of the mold, must also be cleaned-and centrifugation procedures that are optimized for cleaning the surface of a mold may not be effective in cleaning an interior cavity within the mold. Accordingly, there is a need for new approaches to cleaning hollow molds for use in making dental appliances.

### Summary

According to a first aspect, there is provided a method of making a plurality of polymer dental appliances as defined in claim 1 of the appended claims.

In some embodiments, the centrifugally separating step is carried out with the plurality of hollow molds retained on the build platform.

In some embodiments, each of the plurality of hollow molds is oriented vertically on the build platform.

In some embodiments, each of the plurality of hollow molds is oriented horizontally on the build platform, with the bottom portion on (e.g., directly on) said build platform.

In some embodiments, each of the plurality of hollow molds has a plurality of residual resin drain openings formed therein, each drain opening communicating between or extending between said hollow cavity and the external surface portion.

In some embodiments, each of the plurality of hollow molds further includes a grid (e.g., a grid formed from struts, optionally with at least some of the struts interconnected at nodes), the grid formed in an supporting the hollow cavity.

In some embodiments, the grid is on the build platform.

In some embodiments, at least 30 percent of the total volume of the hollow mold is occupied by the hollow cavity.

In some embodiments, the build platform including a release sheet adhered thereto, with the plurality of hollow molds adhered to the release sheet. This provides for additional advantages and features discussed further below.

In some embodiments, the further curing step (c) is carried out by:
(c₁) separating the release sheet from the build platform with the hollow molds retained on the release sheet; and then
(c₂) further curing said bottom portions (including the hollow cavities) by illuminating the bottom portions with ultraviolet light through the release sheet; and then
(c₃) separating each hollow mold from said release sheet.

In some embodiments, the further curing of the plurality of hollow molds is carried out concurrently.

In some embodiments, the further curing of the external surface portion and the bottom portion of each said plurality of molds is carried out concurrently.

In some embodiments, the thermoplastic polymer sheet includes a clear polymer sheet.

In some embodiments, the dental appliances include orthodontic aligners, orthodontic retainers, orthodontic splints, dental night guards, dental bleaching (or whitening) trays, or a combination thereof.

In some embodiments, the plurality of polymer dental appliances include at least one progressive set of dental appliances (e.g., a progressive set of dental aligners) for a specific patient.

In some embodiments, the centrifugally separating step is carried out in an enclosed chamber containing a volatile organic solvent vapor (*i.e.,* the solvent in gas form), without contacting liquid organic solvent to the hollow molds, with the vapor present in an amount sufficient to reduce the viscosity of the residual resin. This too provides for additional advantages and features discussed further below.

In some embodiments: at least one or each arch or mold has a first and second opposing back portions, a front portion, and a pair of opposite lateral portions therebetween; the cavity extends from the first back portion to the second back portion through the front portion and the opposite lateral portions; at least one of or each of the lateral portions and said front portion includes at least one drain opening (with the drain openings preferably on the buccal surface of the arch); and the centrifugally separating step (b) includes flowing said residual resin through the cavity and the drain openings.

In some embodiments, at least one of the front portion, and the pair of opposite lateral portions includes two drain openings (e.g., each lateral portion includes one drain opening, and the front portion includes two spaced apart drain openings; each lateral portion includes two spaced apart drain openings and the front portion includes one drain opening; etc, with the drain openings preferably on the buccal surface of said arch.)

In some embodiments, the drain openings have an average diameter of from 0.6 to 1.3 mm (e.g., 1 mm) and are spaced apart from one another an average of from 2 to 8 mm (e.g., 4 mm).

In some embodiments, each back portion includes either a drain opening or a vent opening.

In some embodiments, the height of each drain opening is greater than the height of the cavity in the region of the cavity adjacent each drain opening.

The height of the cavity or drain opening is: (i) substantially the same throughout the arch, or *(ii)* contoured through the arch in a configuration to facilitate the flow of residual resin out of the hollow cavity during centrifugation on a carrier platform when mounted in any of a plurality (*e.g*., at least three, four, five or more) of positions on the carrier platform.

Hollow molds useful for carrying out these methods, and apparatus useful for carrying out steps of these methods, are also described and discussed further below.

According to a second aspect, there is provided a hollow mold produced by additive manufacturing from a polymerizable resin as defined in claim 10 of the appended claims.

**In** some embodiments, the external surface portion has an upper portion and a side portion, and with the bottom portion having a base surface portion, with the residual resin drain openings formed in said side portion.

**In** some embodiments, the base surface portion is planar.

**In** some embodiments, the mold further includes a grid formed from struts (optionally with at least some of the struts interconnected at nodes), the grid formed in and supporting the hollow cavity.

**In** some embodiments, the struts of the grid are coplanar with the base surface portion.

**In** some embodiments, the struts have top, bottom, and side surface portions, the bottom surface portions are coplanar with the base surface portion, and: the top surface portions are configured (e.g., peaked or domed) to promote drainage of residual resin); and/or the struts include resin drain openings (e.g., channels extending through the side surface portions) formed therein.

**In** some embodiments, at least 30 percent of the total volume of the hollow mold is occupied by the hollow cavity.

**In** some embodiments, the drain openings are either closed from or open to tthe base surface portion.

**In** some embodiments: the arch has a first and second opposing back portions, a front portion, and a pair of opposite lateral portions therebetween; the cavity extends from the first back portion to the second back portion through the front portion and the opposite lateral portions; and each of the lateral portions and the front portion includes at least one drain opening (with the drain openings preferably on the buccal surface of the arch).

**In** some embodiments, at least one of the front portion, and the pair of opposite lateral portions includes two drain openings (e.g., each lateral portion includes one drain opening, and the front portion includes two spaced apart drain openings; each lateral portion includes two spaced apart drain openings and the front portion includes one drain opening; etc, with the drain openings preferably on the buccal surface of the arch.)

**In** some embodiments, the drain openings have an average diameter of from 0.6 to 1.3 mm (e.g., 1 mm) and are spaced apart from one another an average distance of from 2 to 8 mm (e.g., 4 mm).

**In** some embodiments, each back portion includes either a drain opening or a vent opening.

**In** some embodiments, the height of each drain opening is greater than the height of the cavity in the region of the cavity adjacent each said drain opening.

The height of the cavity or drain opening is: (i) substantially the same throughout the arch, or *(ii)* contoured through the arch in a configuration to facilitate the flow of residual resin out of the hollow cavity during centrifugation on a carrier platform when mounted in any of a plurality *(e.g.,* at least three, four, five or more) of positions on the carrier platform.

A post-production curing chamber for additively manufactured objects is described herein, including: (a) a housing having an access door; (b) a light transmissive tray within the housing configured to receive a light-transmissive release sheet having a plurality of additively manufactured objects thereon; and (c) an ultraviolet light source connected to the housing and positioned to project light down toward the light transmissive tray; and (d) an ultraviolet light source connected to the housing and positioned to project light up through the light transmissive tray.

**In** some embodiments, the curing chamber further includes an inert gas source *(e.g.,* a nitrogen source) connected to the housing.

**In** some embodiments, the light transmissive tray includes tempered glass, sapphire, or a combination thereof.

In some embodiments, the light transmissive tray is removably or slidably received on mounts or rails in the housing.

The foregoing and other objects and aspects of the present invention are explained in greater detail in the drawings herein and the specification set forth below.

### Brief Description of the Drawings

**Figure 1** is a perspective view of a first embodiment of a hollow mold as described herein;
**Figure 2** is a bottom plan view of the hollow mold of **Figure 1****;**
**Figure 3** is a top plan view of the hollow mold of **Figure 1****;**
**Figure 4** is a perspective view of a second embodiment of a hollow mold as described herein;
**Figure 5** is a perspective view of a third embodiment of a hollow mold as described herein;
**Figure 6** is a bottom plan view of the hollow mold of **Figure 5****;**
**Figure 7** is a perspective view of an additive manufacturing build platform having a plurality of hollow molds of **Figures 1-3** adhered thereto in a vertical orientation;
**Figure 8** is a perspective view of an additive manufacturing build platform having a plurality of hollow molds of **Figure 4** adhered thereto in a horizontal orientation;
**Figure 9** is a schematic diagram of a single build platform of **Figure 8** mounted for centrifugal separation of residual resin from the hollow molds;
**Figure 10** is a schematic diagram of two (or more) build platforms of **Figure 8** mounted for centrifugal separation of residual resin from the hollow molds;
**Figure 11A** is a schematic diagram of two (or more) build platforms of **Figure 8** mounted in an inward-facing configuration for centrifugal separation of residual resin from the hollow molds;
**Figure 11B** is a schematic diagram similar to that of **Figure 11A****,** except that the top edge portions of the build platforms are now tilted inwards towards the rotor to direct flow of residual resin out from the bottom, or lower, edge portion of the build platform (as shown by the pair of dashed arrows).
**Figure 11C** is a top plan view of the schematic illustration of **Figure 11A****,** mounting six build platforms, all in angled orientation to the axis of rotation and symmetric with one another;
**Figures 12A** and **12B** are bottom plan views of a hollow model as described herein, showing how resin contained within the cavity can be centrifugally removed from the cavity regardless of the orientation of the mold on the build platform;
**Figures 13A** and **13B** are sectional views of two different hollow molds as described herein, sectioned through a single drain opening, showing that the height of the drain opening above the build platform is at least as great as the height of the internal cavity (adjacent the drain opening) above the build platform.
**Figure 14** is a schematic diagram of a post-production curing chamber for additively manufactured hollow molds useful in the methods and systems described herein.
**Figure 15** is a flow chart illustrating one embodiment of a process as described herein.
**Figure 16A** is a perspective view of a hollow mold as described herein, showing the grid, or "base grid" that supports the hollow cavity.
**Figure 16B** is a bottom view of the mold of **Figure 16A****.**
**Figure 16C** is a side sectional, perspective, view of the mold of **Figures 16A-16B****,** taken along the dashed line **g-g** of **Figure 16B****.**
**Figure 16D** is a side sectional, perspective, view of the mold of **Figures 16A-16B****,** again taken along the dashed line **g-g** of **Figure 16B** but viewed from a different perspective than **Figure 16C****.**
**Figure 17** is a side sectional schematic view of a mold as described in **Figures 16A-****16D,** illustrating the volume of the hollow cavity.

### Detailed Description of Illustrative Embodiments

The present invention is now described more fully hereinafter with reference to the accompanying drawings, in which embodiments of the invention are shown. This invention may, however, be embodied in many different forms and should not be construed as limited to the embodiments set forth herein; rather these embodiments are provided so that this disclosure will be thorough and complete and will fully convey the scope of the invention as defined by the appended claims to those skilled in the art.

As used herein, the term "and/or" includes any and all possible combinations of one or more of the associated listed items, as well as the lack of combinations when interpreted in the alternative ("or").

### 1. ADDITIVE MANUFACTURING OF HOLLOW MOLDS.

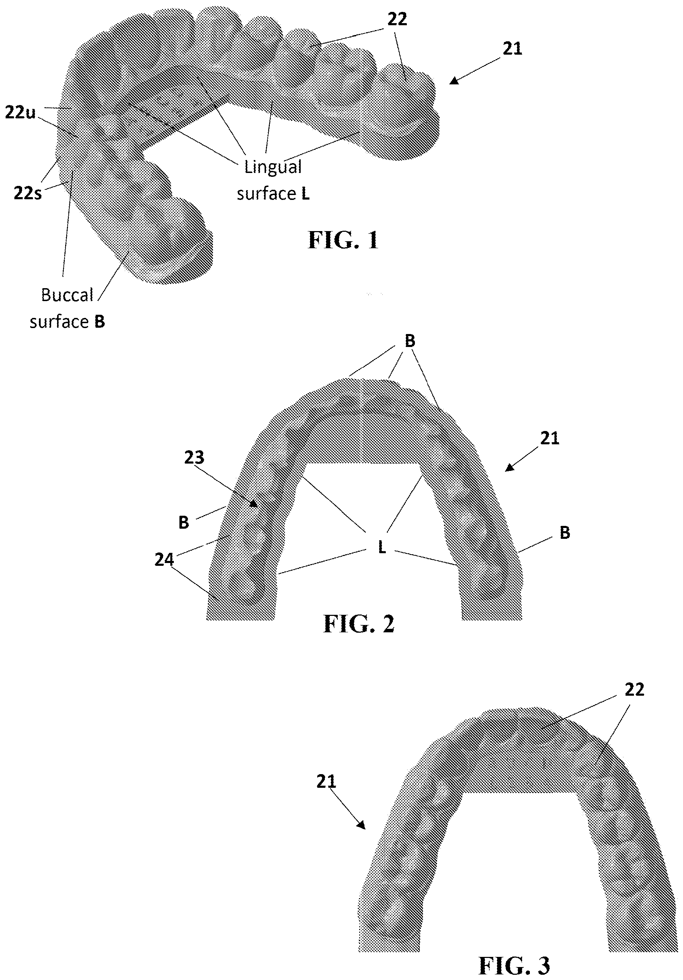

As shown by the non-limiting examples of **Figures 1-6****,** hollow molds **(21, 31, 31')** produced by additive manufacturing from a polymerizable resin typically have an external surface portion configured in the shape of a dental arch **(22, 32, 32')** and a bottom portion having a hollow cavity **(23, 33, 33')** therein. In some embodiments, the mold has a plurality of residual resin drain openings formed therein, each drain opening communicating between or extending between the hollow cavity and the external surface portion. The external surface portion typically has an upper portion **(22u; 32u; 32u')** and a side portion **(22s; 32s; 32s'),** and with the bottom portion having a peripheral edge portion **(24, 34')** (also referred to as a base surface portion), with the residual resin drain openings formed in the side portion. The base surface portion/peripheral edge portion can be planar, either due to the mold being adhered to the carrier platform when printed horizontally on a carrier platform during initial exposure, or even when printed vertically, so that the mold has a flat bottom to aid in placing into a thermoforming apparatus for the thermoforming step.

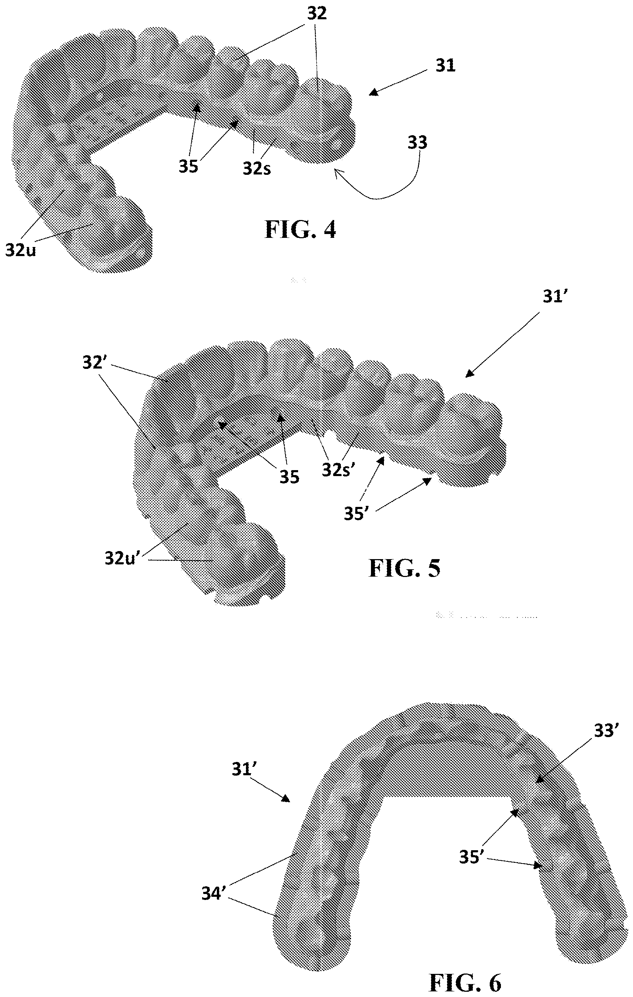

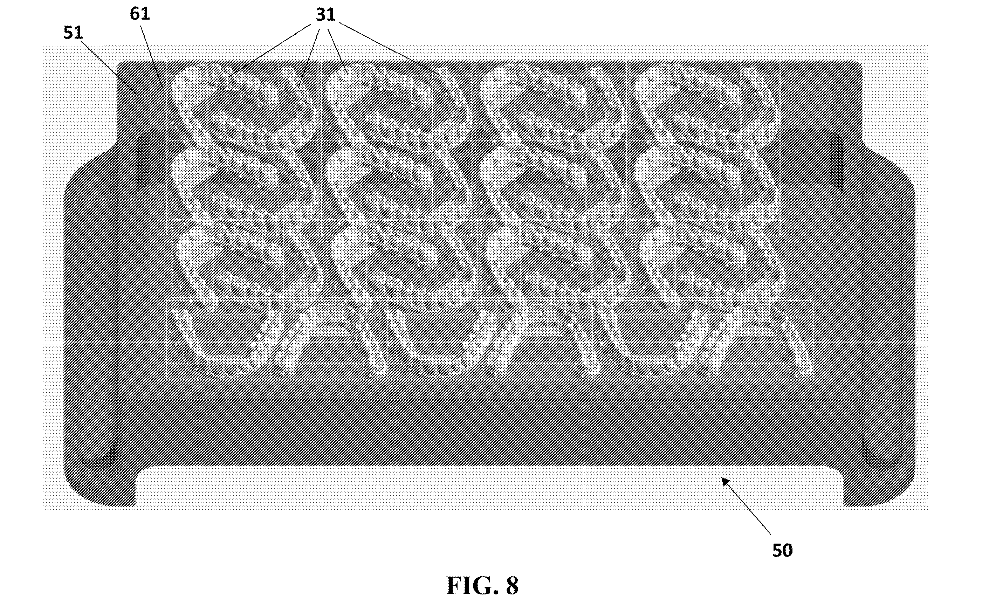

As noted above, in some embodiments (such as those intended for orientation of the molds horizontally on the build platform as shown in **Figures 8-10****)** each of the plurality of molds has a plurality of residual resin drain openings formed therein, each drain opening communicating between or extending between the hollow cavity and the external surface portion. In some embodiments the drain openings are closed from **(****Figure 4****, 35;** "windows") the peripheral edge portion, while in other embodiments the draining openings are open to **(****Figures 5-6****, 35';** "doors") the peripheral edge portion. Of course, both styles can be included on a single mold, such as shown in **Figures 5-6****.**

Suitable additive manufacturing methods and apparatus, including bottom-up and top-down additive versions thereof (generally known as stereolithography) are known and described in, for example, U.S. Patent No. 5,236,637 to Hull, US Patent Nos. 5,391,072 and 5,529,473 to Lawton, U.S. Patent No. 7,438,846 to John, US Patent No. 7,892,474 to Shkolnik, U.S. Patent No. 8,110,135 to El-Siblani, U.S. Patent Application Publication No. 2013/0292862 to Joyce, and US Patent Application Publication No. 2013/0295212 to Chen et al.

In some embodiments, the additive manufacturing step is carried out by one of the family of methods sometimes referred to as as continuous liquid interface production (CLIP). CLIP is known and described in, for example, US Patent Nos. 9,211,678; 9,205,601; 9,216,546; and others; in J. Tumbleston et al., Continuous liquid interface production of 3D Objects, Science 347, 1349-1352 (2015); and in R. Janusziewcz et al., Layerless fabrication with continuous liquid interface production, Proc. Natl. Acad. Sci. USA 113, 11703-11708 (October 18, 2016). Other examples of methods and apparatus for carrying out particular embodiments of CLIP include, but are not limited to: Batchelder et al., US Patent Application Pub. No. US 2017/0129169 (May 11, 2017); Sun and Lichkus, US Patent Application Pub. No. US 2016/0288376 (Oct. 6, 2016); Willis et al., US Patent Application Pub. No. US 2015/0360419 (Dec. 17, 2015); Lin et al., US Patent Application Pub. No. US 2015/0331402 (Nov. 19, 2015); D. Castanon, S Patent Application Pub. No. US 2017/0129167 (May 11, 2017). B. Feller, US Pat App. Pub. No. US 2018/0243976 (published Aug 30, 2018); M. Panzer and J. Tumbleston, US Pat App Pub. No. US 2018/0126630 (published May 10, 2018); K. Willis and B. Adzima, US Pat App Pub. No. US 2018/0290374 (Oct. 11, 2018) L. Robeson et al., PCT Patent Pub. No. WO 2015/164234 (see also US Patent Nos. 10,259,171 and 10,434,706); and C. Mirkin et al., PCT Patent Pub. No. WO 2017/210298 (see also US Pat. App. US 2019/0160733).

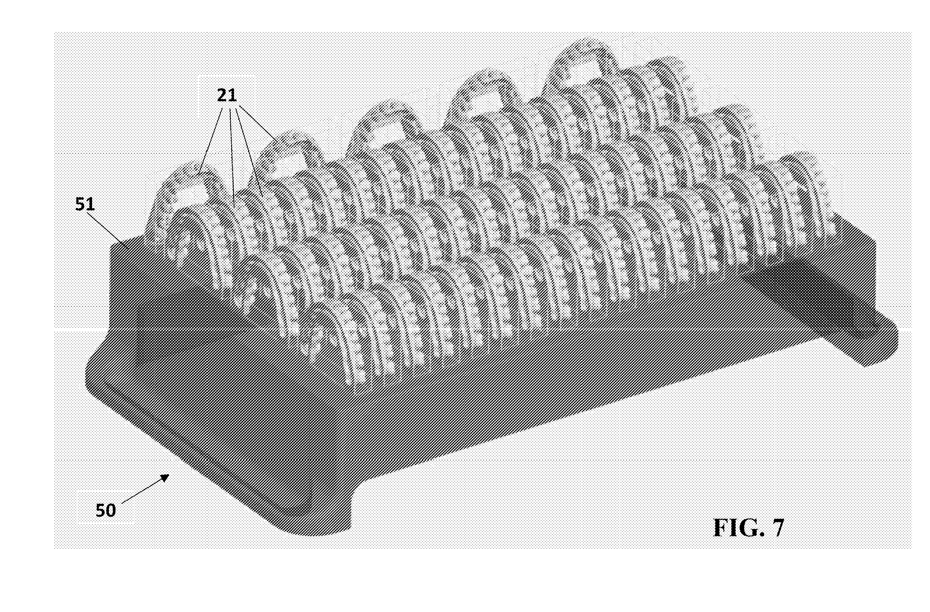

Any suitable build platform **(50)** can be used, including but not limited to that described in Dachs, *Removable build platform for an additive manufacturing apparatus,* PCT Patent Application Pub. No. WO2020/069167 (Sept 26, 2019). In some embodiments, the build platform has a planar (build) surface **(51)** as shown in **Figures 7-10****.**

In some embodiments such as illustrated in **Figure 7****,** each of the plurality of hollow molds is oriented vertically on the build platform. In other embodiments, such as illustrated in **Figure 8****,** each of the plurality of hollow molds is oriented horizontally on the build platform, with the bottom portion on (or directly on) the build platform.

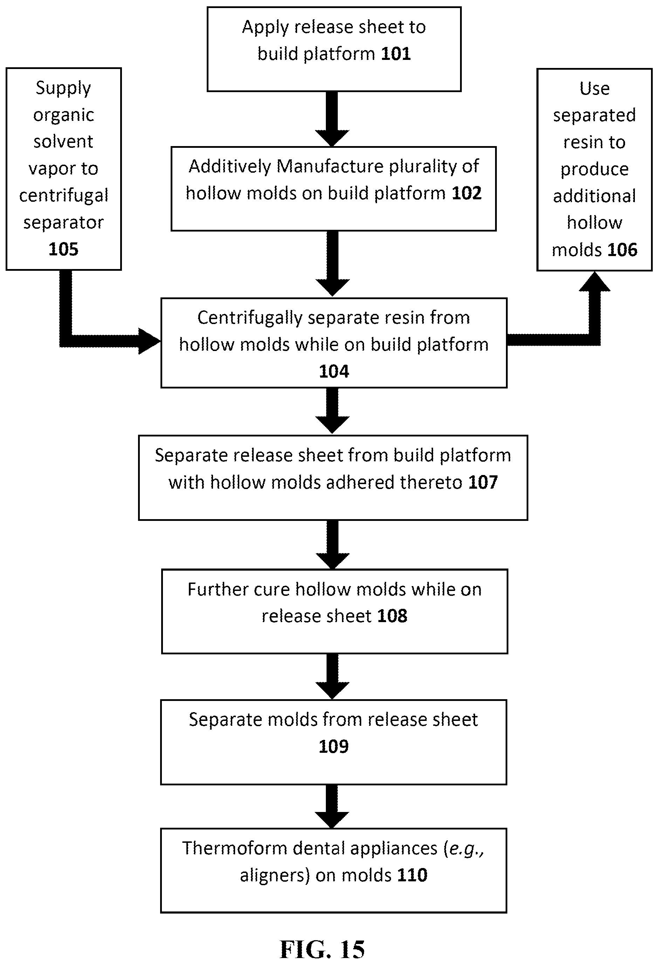

As shown in **Figure 8****,** an adhesive release sheet **(61),** preferably comprised of a light-transmissive polymer material, can be applied **(****Figure 15****,** step **101)** to the carrier platform prior to initiating additive manufacturing thereon so that the additively manufactured objects are adhered to the release sheet, and through the release sheet to the carrier platform, as described in X. Gu, PCT Patent Application Pub. No. WO 2018/118832 (published 28 June 2018). Adhesion of the objects to the release sheet during and after removing the release sheet from the carrier platform can be promoted by strongly exposing the initial layer or slice of resin to light at the beginning of the additive manufacturing process, by employing adhesion-enhancing surface treatment such as texturing/microtexturing to the surface of the release sheet, etc., including combinations thereof.

### 2. CENTRIFUGAL SEPARATION.

Centrifugal separation may be carried out by any suitable technique, including but not limited to those described in Murillo and Dachs, *Resin extractor for additive manufacturing,* US Patent App. Pub. No. 2021/0086450 (March 25, 2021); Hiatt et al., Method for removing and reclaiming unconsolidated material from substrates following fabrication of objects thereon by programmed material consolidation techniques, US Patent App. Pub. No. 2004/0159340 (Aug. 19, 2004); and Converse et al., Systems and methods for resin recovery in additive manufacturing, PCT Patent App. Pub. No. WO 2020/146000 (July 16, 2020).

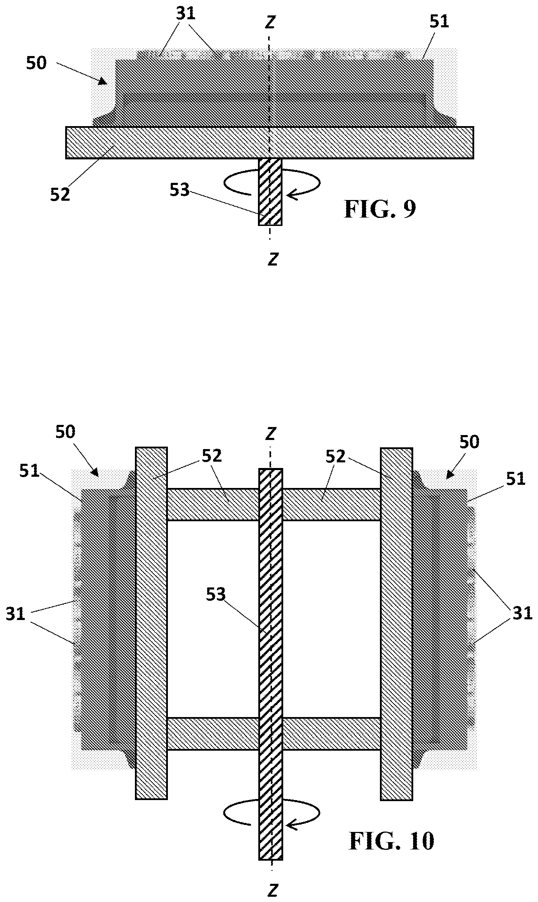

In one embodiment, the build platform **(50)** can be mounted on a support or turntable **(52)** with the planar build surface **(51)** horizontal and perpendicular to an axis of rotation **(*Z-Z*)** for spinning to centrifugally separate excess resin as shown in **Figure 9****.**

In another embodiment, the carrier platform **(50)** can be mounted on a support **(52)** with the planar build surface **(51)** oriented parallel to an axis of rotation **(*Z-Z*)** for spinning to centrifugally separate excess resin as shown in **Figure 10****.**

In still other embodiments, the build platform platform can be mounted on a support at an angle offset from *(e.g.,* of from 10 to 80 degrees) from the axis of rotation. In one embodiment, the planar build surface is oriented perpendicularly to a radius of the rotor **(53)** and tangentially to the axis of rotation **(*Z-Z*)** of the rotor.

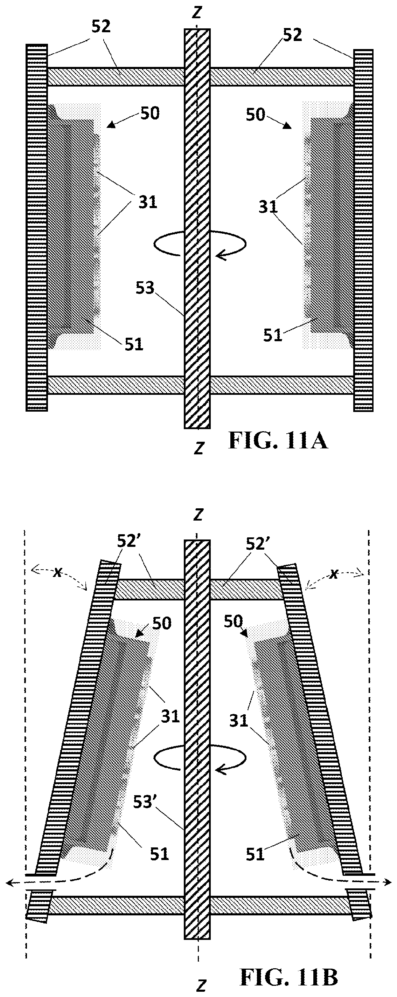

In still other embodiments, the build platforms can be mounted in an inward-facing (rotor-facing or axis of rotation facing) orientation, as shown in **Figure 11A****,** optionally with the upper edge (portion) of the build platform tilted inward toward the axis of rotation, as shown in **Figure 11B****,** and preferably with all build platforms oriented symmetrically with one another to facilitate balance, to direct the flow of residual resin outward along the bottom edge portion of the build platform, as shown by the dashed arrows in **Figure 11B****.**

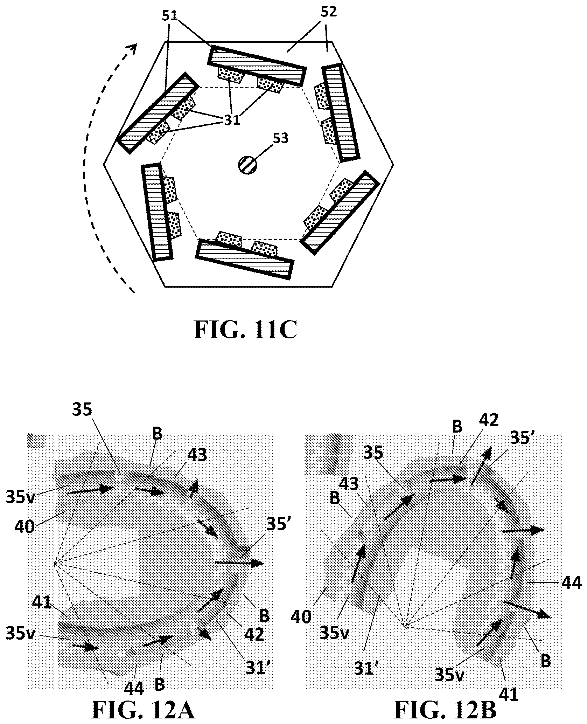

In still another embodiment, the build platforms can be mounted in inward facing orientation, as shown by the top plan view in **Figure 11C****,** but with one side edge portion spaced further out from the axis of rotation (and all build platforms arranged symmetrically with one another to facilitate balance) to facilitate resin flow from that side edge portion.

Referring to **Figures 12A** and **12B****,** the arch (e.g., the external surface portion **32'** shown in **Figure 5****)** or the mold **31'** may have first and second opposing back portions **(40, 41),** a front portion **(42),** and a pair of opposite lateral portions **(43, 44)** therebetween. The cavity **(33')** may extend from the first back portion **(40)** to the second back portion **(41)** through the front portion **(42)** and the opposite lateral portions **(43, 44).** Each of the lateral portions **(43, 44)** and the front portion **(42)** may include at least one drain opening **(35, 35'),** with the drain openings preferably but not necessarily on the buccal surface **(B)** of the arch or mold.

In some embodiments, at least one of the front portion **(42)** and the pair of lateral portions **(43, 44)** includes two drain openings (e.g., each lateral portion includes one drain opening, and the front portion includes one drain opening or two spaced apart drain openings; each lateral portion includes two spaced apart drain openings and the front portion includes one drain opening; one lateral portion includes two drain openings and the front portion includes one drain opening, etc, with the drain openings preferably on the buccal surface **B** of the arch or mold.)

In some embodiments, the drain openings **(35, 35')** are uniformly spaced apart from one another.

In some embodiments, each back portion **(40, 41)** includes either a drain opening or a vent opening **(35v).**

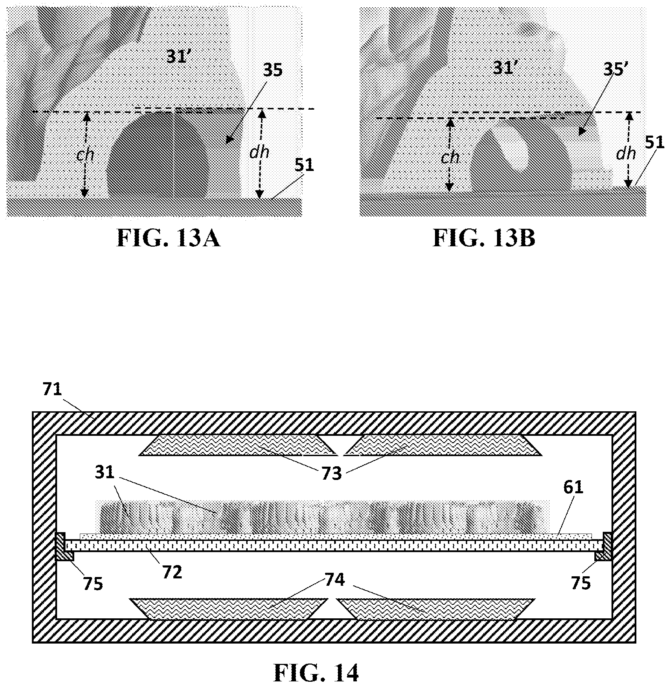

Referring to **Figures 13A** and **13B****,** a height **(dh)** of each drain opening **(35, 35')** may be greater than a height **(ch)** of the cavity **(33')** in the region of the cavity **(33')** adjacent each drain opening **(35, 35').** The height **(dh)** of each drain opening **(35, 35')** or at least some of the drain openings **(35, 35')** is: (i) substantially the same through the arch or mold; or (ii) contoured through the arch or mold in a configuration to facilitate the flow of residual resin out of the hollow cavity **(33')** during centrifugation on a carrier platform (see, e.g., **50** in **Figures 7-10****)** when mounted in any of a plurality (e.g., at least three, four, five, or more) of positions on the carrier platform. In some embodiments, the drain opening **(35, 35')** widens or increases in height from the cavity **(33')** toward the buccal surface **(B)** (see, e.g., **Figures 12A** and **12B****).**

While in a preferred embodiment the molds might be positionable in a near infinite number of orientations, a small number of different orientations on the carrier platform should provide the flexibility to "pack" a large number of molds onto a single carrier platorm.

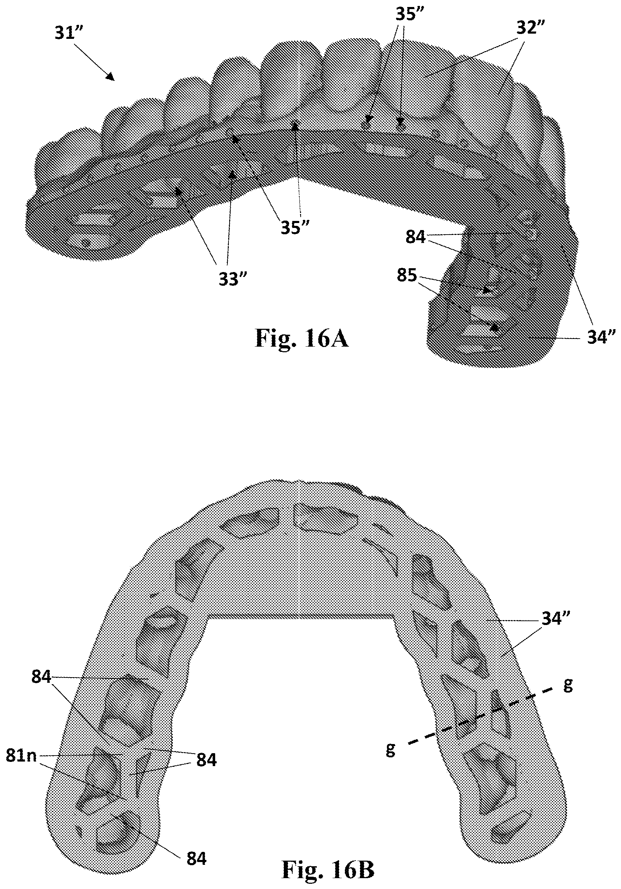

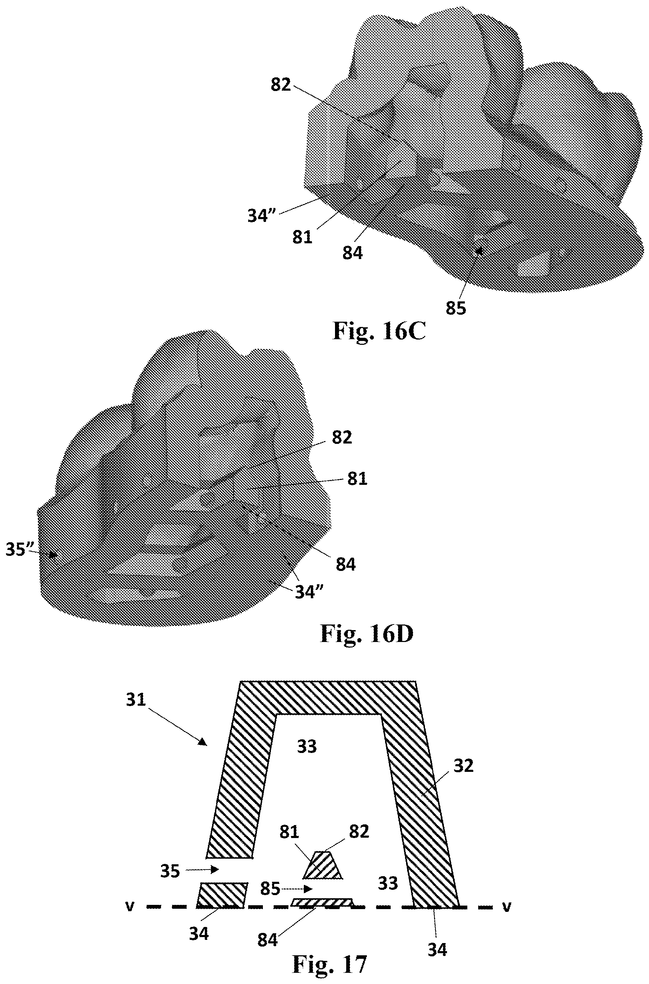

***Base grid**.* In some preferred embodiments, and as illustrated in **Figures 16A-16D****,** each said plurality of hollow molds further comprises one or more grids formed in and supporting the hollow cavity **33".** Such grids allow more extensive hollowing of the mold, while retaining dimensional stability of the mold, and resulting accuracy of dental appliances thermoformed thereon.

The grid or grids are typically formed of struts **81,** optionally with at least some of the struts interconnected at nodes **81n.**

The struts generally have top **82,** bottom **84,** and side surface portions. In some embodiments, the bottom surface portions **84** are coplanar with the base surface portions **34",** such that all are adhered to the build platform. Numerous different configurations of grids can be used to support the hollow cavity. While in the illustrated embodiments the grid is a single planar (or "two dimensional") grid, in other embodiments multiple two-dimensional grids can be included inside the hollow cavity in a tiered fashion, or a three-dimensional grid or lattice can be used, with struts extending further upward into the cavity to further support the walls of the mold. In some embodiments, the strut top portions 82 have a configuration, such as a peaked or domed configuration, that promotes drainage of residual resin out of the hollow cavity during centrifugation. In some embodiments, the struts themselves include resin drain openings 85 to further facilitate the drainage of residual resin out of the hollow cavity during centrifugation.

As noted, inclusion of the grid(s) allows more extensive hollowing, while maintaining dimensional stability of, the model. In some embodiments, hollowing is such that at least 30 percent (up to at least 50, 60, or 70 percent or more) of the total volume of the mold is occupied by the hollow cavity). As schematically illustrated in **Figure 17****,** total volume is defined as the volume defined by a boundary circumscribed by (a) the outer surface of the mold 31, plus a plane (line **v-v** in **Fig. 17****)** drawn across the bottom surface portion **34** of the mold, with the volume of the cavity not including space occupied by the grid.

***Centrifugal separation with solvent vapor.*** In some embodiments, the centrifugally separating step is carried out in an enclosed chamber containing a volatile organic solvent vapor, optionally but preferably without contacting liquid organic solvent to the hollow molds (e.g., with the solvent in gas form, rather than as a spray or mist of liquid droplets). In preferred embodiments, the vapor is present in an amount sufficient to reduce the viscosity of the residual resin.

Suitable solvents for volatilization in the methods and apparatus include, but are not limited to, alcohol, ester, dibasic ester, ketone, acid, aromatic, hydrocarbon, ether, dipolar aprotic, halogenated, and base organic solvents, and combinations thereof. In some embodiments, the solvent comprises a hydrofluorocarbon, a hydrofluoroether, or a combination thereof. In some embodiments, the solvent is or includes an azeotropic mixture comprised of at least a first organic solvent and a second organic solvent. Solvents can be heated to aid in their volatilization as necessary, and the inner chamber of the separator can be heated to maintain the solvent in a volatile state as necessary. Particular examples of solvents include, but are not limited to, methanol, acetone, isopropanol, and non-flammable organic solvents (e.g., trichlorethylene, methylene chloride, NOVEC^{™} solvent, VERTREL^{™} solvent, etc.)

Thus, in some examples, residual resin may be cleaned from an additively manufactured hollow molds by:
(a) enclosing the additively manufactured hollow molds in an inner chamber of a centrifugal separator, each additively manufactured hollow mold including a light polymerized resin with a surface coating of viscous, unpolymerized, residual resin;
(b) flooding the chamber with a volatile organic solvent vapor without contacting liquid organic solvent to each hollow mold, the vapor present in an amount sufficient to reduce the viscosity of the residual resin; and
(c) spinning the additively manufactured hollow molds in the chamber to centrifugally separate at least a first portion of the residual resin from the object.

The solvent vapor may be generated from liquid solvent inside said inner chamber.

The solvent vapor may be generated from liquid solvent outside the inner chamber, and the solvent vapor may then be passed into the inner chamber.

The generating step may be carried out by heating the liquid solvent, bubbling gas *(e.g.,* air) through the liquid solvent, or a combination thereof.

The flooding and spinning steps may be carried out at ambient pressure and temperature.

The solvent may be selected from the group consisting of methanol, acetone, and isopropanol.

The solvent may be a non-flammable organic solvent (e.g., trichlorethylene, methylene chloride, NOVEC^{™} solvent, VERTREL^{™} solvent, etc.) In other examples, such as where the solvent is a flammable organic solvent, the inner chamber of the separator may be flooded with an inert gas such as nitrogen to reduce the risk of combustion.

The spinning step may be followed by the steps of: condensing the solvent vapor to produce recovered liquid solvent, collecting the recovered liquid solvent, and optionally (but in some examples preferably) re-volatilizing the recovered liquid solvent and then repeating steps (a) to (c) with the re-volatized reovered liquid solvent and a subsequent additively manufactured object.

### 3. POST-SPIN-CLEAN CURE OF OBJECTS WHILE ON RELEASE SHEET.

After residual resin is centrifugally separated from the printed objects, the objects can be further cured by exposure to light, particularly ultraviolet light. An example of a post-production curing chamber for carrying out this exposure is shown in **Figure 14****,** where the apparatus includes a housing **(71)** having an access door (not shown); a light transmissive tray **(72)** within said housing, the tray configured to receive a light-transmissive release sheet having a plurality of additively manufactured objects thereon; (c) an ultraviolet light source **(73)** connected to the housing and positioned to project light down toward said light transmissive tray (and thereby further curing a thin layer of resin on the top surface of cleaned objects); and (d) an ultraviolet light source **(74)** connected to the housing and positioned to project light up through said light transmissive tray (and thereby further curing a thin layer of resin on the bottom surface, and interior surfaces of a hollow cavity of each object). Objects **31** are conveniently retained on the release sheet **(61)** which is placed on the tray, and the release sheet is made of a light-transmissive material so light can pass through it to the bottom surfaces of the objects.

If desired, an inert gas source (*e.g.,* a nitrogen source) can be connected to said housing.

The light transmissive tray can be made from any suitable material, including but not limited to tempered glass, sapphire, or a combination thereof. The light transmissive tray is preferably a solid, continuous, sheet of material, rather than a perforated tray, grill, or grating, so that light transmission therethrough is substantially uniform. The housing can be provided with mounts or rails **(75)** on the interior thereof, so that the tray can slide into the chamber, or be lifted and dropped into the chamber, in an appropriate alignment with respect to the light sources **(73, 74).**

### 4. PROCESS OVERVIEW.

An overview of the process described herein is given in **Figure 15****.** In some embodiments, the process comprises the steps of:
(a) additively manufacturing **(102)** a plurality of hollow molds as described above from a polymerizable resin,
(b) centrifugally separating **(104)** residual resin from both the external surface portion and the bottom portion (including the hollow cavity) of each of the plurality of molds (optionally with the supply of organic solvent vapor into the separator **(105)** as discussed above; and/or optionally including the step of recapturing centrifugally separated resin **(106)** for use in making additional hollow molds by the processes described herein);
(c) further curing (for example, **(108)),** concurrently or sequentially, the external surface portion and the bottom portion of each of the plurality of molds with ultraviolet light; then
(d) thermoforming **(110)** a thermoplastic polymer sheet on each hollow mold top portion to produce the plurality of polymer dental appliances; and then
(e) separating each of the plurality of polymer dental appliances from each corresponding hollow mold.

As noted previously, in preferred embodiments the additive manufacturing step **(102)** is preceded by the step of applying a release sheet **(101)** to the build platform of the additive manufacturing apparatus.

In some preferred embodiments, the further curing of the plurality of molds is carried out concurrently-for example, by retaining the plurality of molds on a release sheet that is inserted into a post-printing, and post-centrifugation, light curing chamber, as discussed further herein in connection with **Figure 14****).** More particularly, in the embodiment of the method shown in **Figure 15****,** the further curing step (c) is carried out by: (c₁) separating **(107)** the release sheet from the build platform with the hollow molds retained on the release sheet; and then (c₂) further curing **(108)** the bottom portions (including the hollow cavities) by illuminating the bottom portions with ultraviolet light through the release sheet (*e.g*., with an apparatus of **Figure 14****);** and then (c₃) separating each hollow mold from the release sheet **(109).**

Examples of dental appliances that can be formed by the methods described herein include, but are not limited to, aligners, orthodontic retainers, orthodontic splints, dental night guards, dental bleaching (or whitening) trays, and combination thereof.

In some embodiments of the methods, the plurality of polymer dental appliances comprises at least one progressive set of dental appliances (*e.g*., a progressive set of dental aligners) for a specific patient.

In some cases, the the thermoplastic polymer sheet from which the dental appliance is thermoformed is comprised of a clear polymer sheet, although for other embodiments translucent, tinted, and/or opaque polymer sheets can be used.

An advantage of some embodiments of the processes described herein is that sufficient residual residual resin is removed from the aligners to provide good accuracy of thermoformed dental appliances thereon, while at the same time leaving a sufficient thin film for further curing to mask aliasing or other artifacts of the additive manufacturing process, resulting in a smoother finish on the dental appliance. While spraying of liquid solvent onto additively manufactured objects during centrifugal separation has been suggested, such liquid droplets may not provide this balance of potentially competing goals.

A still further advantage of some embodiments of the processes described herein is that, without the inclusion of solvent vapor during the centrifugal separation step, a thin layer of residual resin on the release sheet is solidified during the post-centrifugation cure. When the objects are then separated from the release sheet, this thin layer is also separated, typically as small flakes of hardened resin. These small flakes present at minimum a cleaning and disposal problem, particularly in a manufacturing setting where the process is carried out on a repeated basis.

The foregoing is illustrative of the present invention, and is not to be construed as limiting thereof. The invention is defined by the following claims.

## Claims

1. A method of making a plurality of polymer dental appliances, comprising the steps of:
(a) additively manufacturing a plurality of hollow molds (21, 31, 31') from a polymerizable resin, each said mold having an external surface portion (22, 32, 32') configured in the shape of a dental arch and a bottom portion having a hollow cavity (23, 33, 33') therein, and with said additively manufacturing step carried out with said plurality of hollow molds formed on a build platform (50), wherein each said plurality of hollow molds is oriented horizontally on said build platform with said bottom portion on said build platform, and wherein each said plurality of hollow molds has a plurality of residual resin drain openings (35, 35') formed therein, each drain opening communicating between or extending between said hollow cavity and said external surface portion;
(b) centrifugally separating residual resin from both said external surface portion and said bottom portion (including said hollow cavity) of each said plurality of molds;
(c) further curing, concurrently or sequentially, said external surface portion and said bottom portion of each said plurality of molds with ultraviolet light; then
(d) thermoforming a thermoplastic polymer sheet on each said hollow mold external surface portion to produce said plurality of polymer dental appliances; and
(e) separating said plurality of polymer dental appliances from said plurality of hollow molds;
wherein the height of said cavity is:
(i) substantially the same throughout said arch, or
(ii) contoured through said arch in a configuration to facilitate the flow of residual resin out of said hollow cavity during centrifugation on a carrier platform when mounted in any of a plurality of positions on said carrier platform..

2. The method of claim 1, wherein said centrifugally separating step is carried out with said plurality of hollow molds retained on said build platform.

3. The method of claim 1 or 2, wherein each said plurality of hollow molds further comprises a grid, the grid formed in and supporting said hollow cavity, wherein said grid is on said build platform, and optionally wherein at least 30 percent of the total volume of said hollow mold is occupied by said hollow cavity.

4. The method of any preceding claim, said build platform including a release sheet (61) adhered thereto, with said plurality of hollow molds adhered to said release sheet.

5. The method of claim 4, wherein said further curing step (c) is carried out by:
(c1) separating said release sheet from said build platform with said hollow molds retained on said release sheet; and then
(c2) further curing said bottom portions (including said hollow cavities) by illuminating said bottom portions with ultraviolet light through said release sheet; and then
(c3) separating each said hollow mold from said release sheet.

6. The method of claim 5, wherein said further curing of said plurality of hollow molds is carried out concurrently, optionally wherein said further curing of said external surface portion and said bottom portion of each said plurality of molds is carried out concurrently.

7. The method of any preceding claim, wherein said dental appliances comprise orthodontic aligners, orthodontic retainers, orthodontic splints, dental night guards, dental bleaching or whitening trays, or a combination thereof.

8. The method of any preceding claim, wherein:
at least one or each said arch or mold has a first and second opposing back portions (40, 41), a front portion (42), and a pair of opposite lateral portions (43, 44) therebetween;
said cavity extends from said first back portion to said second back portion through said front portion and said opposite lateral portions;
at least one of or each of said lateral portions and said front portion includes at least one drain opening with the drain openings preferably on the buccal surface B of said arch; and
said centrifugally separating step (b) comprises flowing said residual resin through said cavity and said drain openings.

9. The method of claim 8, wherein said drain openings have an average diameter of from 0.6 to 1.3 millimeters and are spaced apart from one another an average of from 2 to 8 millimeters.

10. A hollow mold (21, 31, 31') produced by additive manufacturing from a polymerizable resin, said mold having an external surface portion (22, 32, 32') configured in the shape of a dental arch and a bottom portion having a hollow cavity (23, 33, 33') therein, said mold having a plurality of residual resin drain openings (35, 35') formed therein, each drain opening communicating between or extending between said hollow cavity and said external surface portion,
wherein the height of said cavity is:
(i) substantially the same throughout said arch, or
(ii) contoured through said arch in a configuration to facilitate the flow of residual resin out of said hollow cavity during centrifugation on a carrier platform when mounted in any of a plurality of positions on said carrier platform.

11. The mold of claim 10, said external surface portion having an upper portion (22u, 32u, 32u') and a side portion (22s, 32s, 32s'), and with said bottom portion having a preferably planar base surface portion (24, 34'), with said residual resin drain openings formed in said side portion.

12. The mold of claim 10, further comprising a grid formed from struts (81), the grid formed in and supporting said hollow cavity, optionally wherein at least 30 percent of the total volume of said hollow mold is occupied by said hollow cavity.

13. The mold of claim 12, wherein said struts have top, bottom, and side surface portions, wherein said bottom surface portions are coplanar with said base surface portion, and wherein:
said top surface portions are configured to promote drainage of residual resin; and/or
said struts include resin drain openings formed therein.

14. The mold of any one of claims 10 to 13, wherein:
said arch has a first and second opposing back portions (40, 41), a front portion (42), and a pair of opposite lateral portions (43, 44) therebetween;
said cavity extends from said first back portion to said second back portion through said front portion and said opposite lateral portions; and
each of said lateral portions and said front portion includes at least one drain opening with the drain openings preferably on the buccal surface B of said arch.

15. The mold of any one of claims 10 to 14, wherein said drain openings have an average diameter of from 0.6 to 1.3 millimeters and are spaced apart from one another an average of from 2 to 8 millimeters.

## Patentansprüche

1. Verfahren zum Herstellen einer Vielzahl von Polymer-Dentalgeräten, umfassend die folgenden Schritte:
(a) additives Anfertigen einer Vielzahl von Hohlformen (21, 31, 31') aus einem polymerisierbaren Harz, wobei jede Form einen Außenflächenabschnitt (22, 32, 32'), der in der Form eines Zahnbogens konfiguriert ist, und einen Bodenabschnitt mit einem darin befindlichen Hohlraum (23, 33, 33') aufweist, und wobei der additive Anfertigungsschritt mit der Vielzahl von Hohlformen durchgeführt wird, die auf einer Bauplattform (50) ausgebildet sind, wobei jede Vielzahl von Hohlformen horizontal auf der Bauplattform mit dem Bodenabschnitt auf der Bauplattform ausgerichtet ist, und wobei jede Vielzahl von Hohlformen eine Vielzahl von darin ausgebildeten Restharz-Ablauföffnungen (35, 35') aufweist, wobei jede Ablauföffnung zwischen dem Hohlraum und dem Außenflächenabschnitt kommuniziert oder sich dazwischen erstreckt;
(b) zentrifugales Trennen von Restharz sowohl von dem Außenflächenabschnitt als auch von dem Bodenabschnitt (einschließlich des Hohlraums) jeder der Vielzahl von Formen;
(c) weiteres zeitgleiches oder sequentielles Härten des Außenflächenabschnitts und des Bodenabschnitts jeder der Vielzahl von Formen mit ultraviolettem Licht; anschließend
(d) Thermoformen einer thermoplastischen Polymerfolie an jedem Außenflächenabschnitt der Hohlformen, um die Vielzahl von Polymer-Dentalgeräten zu produzieren; und
(e) Trennen der Vielzahl von Polymer-Dentalgeräten von der Vielzahl von Hohlformen;
wobei die Höhe des Hohlraums:
(i) im Wesentlichen über den gesamten Bogen hinweg gleich ist, oder
(ii) über den gesamten Bogen hinweg in einer Konfiguration konturiert ist, die den Fluss von Restharz aus dem Hohlraum während der Zentrifugation auf einer Trägerplattform erleichtert, wenn er in einer von mehreren Positionen auf der Trägerplattform befestigt ist.

2. Verfahren nach Anspruch 1, wobei der Schritt des zentrifugalen Trennens so durchgeführt wird, dass die Vielzahl von Hohlformen auf der Bauplattform gehalten wird.

3. Verfahren nach Anspruch 1 oder 2, wobei jede der Vielzahl von Hohlformen ferner ein Gitter umfasst, wobei das Gitter in dem Hohlraum ausgebildet ist und diesen trägt, wobei sich das Gitter auf der Bauplattform befindet und wobei optional mindestens 30 Prozent des Gesamtvolumens der Hohlform von dem Hohlraum eingenommen wird.

4. Verfahren nach einem vorhergehenden Anspruch, wobei die Bauplattform eine daran haftende Trennfolie (61) beinhaltet, wobei die Vielzahl von Hohlformen an der Trennfolie haftet.

5. Verfahren nach Anspruch 4, wobei der weitere Härtungsschritt (c) durchgeführt wird durch:
(c1) Trennen der Trennfolie von der Bauplattform, wobei die Hohlformen auf der Trennfolie gehalten werden; und anschließend
(c2) weiteres Härten der Bodenabschnitte (einschließlich der Hohlräume) durch Beleuchten der Bodenabschnitte mit ultraviolettem Licht durch die Trennfolie; und anschließend
(c3) Trennen der einzelnen Hohlformen von der Trennfolie.

6. Verfahren nach Anspruch 5, wobei das weitere Härten der Vielzahl von Hohlformen zeitgleich durchgeführt wird, wobei optional das weitere Härten des Außenflächenabschnitts und des Bodenabschnitts jeder der Vielzahl von Formen zeitgleich durchgeführt wird.

7. Verfahren nach einem vorhergehenden Anspruch, wobei die Dentalgeräte kieferorthopädische Ausrichter, kieferorthopädische Halterungen, kieferorthopädische Schienen, dentale Nachtschutzvorrichtungen, Zahnbleich- oder Zahnaufhellungsschalen oder eine Kombination davon umfassen.

8. Verfahren nach einem vorhergehenden Anspruch, wobei:
mindestens eine(r) oder jede(r) Bogen oder Form einen ersten und einen zweiten gegenüberliegenden hinteren Abschnitt (40, 41), einen vorderen Abschnitt (42) und ein Paar gegenüberliegender lateraler Abschnitte (43, 44) dazwischen aufweist;
sich der Hohlraum von dem ersten hinteren Abschnitt zu dem zweiten hinteren Abschnitt durch den vorderen Abschnitt und die gegenüberliegenden lateralen Abschnitte erstreckt;
mindestens einer oder jeder der lateralen Abschnitte und der vordere Abschnitt mindestens eine Ablauföffnung beinhaltet, wobei sich die Ablauföffnungen vorzugsweise auf der bukkalen Oberfläche B des Bogens befinden; und
der Schritt (b) des zentrifugalen Trennens das Strömen des Restharzes durch den Hohlraum und die Ablauföffnungen umfasst.

9. Verfahren nach Anspruch 8, wobei die Ablauföffnungen einen durchschnittlichen Durchmesser von 0,6 bis 1,3 Millimeter aufweisen und durchschnittlich 2 bis 8 Millimeter voneinander beabstandet sind.

10. Hohlform (21, 31, 31'), die durch additives Anfertigen aus einem polymerisierbaren Harz produziert ist, wobei die Form einen Außenflächenabschnitt (22, 32, 32') aufweist, der in Form eines Zahnbogens konfiguriert ist, und einen Bodenabschnitt mit einem darin befindlichen Hohlraum (23, 33, 33') aufweist, wobei die Form eine Vielzahl von darin ausgebildeten Restharz-Ablauföffnungen (35, 35') aufweist, wobei jede Ablauföffnung zwischen dem Hohlraum und dem Außenflächenabschnitt kommuniziert oder sich dazwischen erstreckt,
wobei die Höhe des Hohlraums:
(i) im Wesentlichen über den gesamten Bogen hinweg gleich ist, oder
(ii) über den gesamten Bogen hinweg in einer Konfiguration so konturiert ist, dass sie den Fluss von Restharz aus dem Hohlraum während der Zentrifugation auf einer Trägerplattform erleichtert, wenn er in einer von mehreren Positionen auf der Trägerplattform befestigt ist.

11. Form nach Anspruch 10, wobei der Außenflächenabschnitt einen oberen Abschnitt (22u, 32u, 32u') und einen Seitenabschnitt (22s, 32s, 32s') aufweist, und wobei der Bodenabschnitt einen vorzugsweise ebenen Basisflächenabschnitt (24, 34') aufweist, wobei die Restharz-Ablauföffnungen in dem Seitenabschnitt ausgebildet sind.

12. Form nach Anspruch 10, ferner umfassend ein aus Streben (81) gebildetes Gitter, wobei das Gitter in dem Hohlraum ausgebildet ist und diesen trägt, optional wobei mindestens 30 Prozent des Gesamtvolumens der Hohlform von dem Hohlraum eingenommen werden.

13. Form nach Anspruch 12, wobei die Streben obere, untere und seitliche Oberflächenabschnitte aufweisen, wobei die unteren Oberflächenabschnitte mit dem Basisflächenabschnitt koplanar sind, und wobei:
die oberen Oberflächenabschnitte so konfiguriert sind, dass sie das Ablaufen von Restharz fördern; und/oder
die Streben darin ausgebildete Harz-Ablauföffnungen beinhalten.

14. Form nach einem der Ansprüche 10 bis 13, wobei:
der Bogen einen ersten und einen zweiten gegenüberliegenden hinteren Abschnitt (40, 41), einen vorderen Abschnitt (42) und ein Paar gegenüberliegender lateraler Abschnitte (43, 44) dazwischen aufweist;
der Hohlraum sich von dem ersten hinteren Abschnitt zu dem zweiten hinteren Abschnitt durch den vorderen Abschnitt und die gegenüberliegenden lateralen Abschnitte erstreckt; und
jeder der lateralen Abschnitte und der vordere Abschnitt mindestens eine Ablauföffnung beinhalten, wobei sich die Ablauföffnungen vorzugsweise auf der bukkalen Oberfläche B des Bogens befinden.

15. Form nach einem der Ansprüche 10 bis 14, wobei die Ablauföffnungen einen durchschnittlichen Durchmesser von 0,6 bis 1,3 Millimeter aufweisen und durchschnittlich 2 bis 8 Millimeter voneinander beabstandet sind.

## Revendications

1. Procédé de fabrication d'une pluralité d'appareils dentaires en polymère, comprenant les étapes de :
(a) fabrication additive d'une pluralité de moules creux (21, 31, 31') à partir d'une résine polymérisable, chacun desdits moules comportant une partie de surface externe (22, 32, 32') conçue sous la forme d'une arcade dentaire et une partie inférieure comportant une cavité creuse (23, 33, 33') en son sein, et ladite étape de fabrication additive étant réalisée avec ladite pluralité de moules creux formés sur une plateforme de construction (50), chaque dite pluralité de moules creux étant orientée horizontalement sur ladite plateforme de construction avec ladite partie inférieure sur ladite plateforme de construction, et chaque dite pluralité de moules creux comportant une pluralité d'ouvertures de drainage de résine résiduelle (35, 35') formées en leur sein, chaque ouverture de drainage communiquant entre ladite cavité creuse et ladite partie de surface externe ou s'étendant entre elles ;
(b) séparation par centrifugation de la résine résiduelle à la fois de ladite partie de surface externe et de ladite partie inférieure (y compris ladite cavité creuse) de chaque dite pluralité de moules ;
(c) durcissement supplémentaire, simultané ou séquentiel, ladite partie de surface externe et ladite partie inférieure de chaque dite pluralité de moules avec de la lumière ultraviolette ; puis
(d) thermoformage d'une feuille de polymère thermoplastique sur chaque dite partie de surface externe de moule creux pour produire ladite pluralité d'appareils dentaires en polymère ; et
(e) séparation de ladite pluralité d'appareils dentaires en polymère de ladite pluralité de moules creux ;
ladite hauteur de ladite cavité étant :
(i) sensiblement la même dans toute ladite arcade, ou
(ii) profilée à travers ladite arcade dans une configuration permettant de faciliter l'écoulement de la résine résiduelle hors de ladite cavité creuse pendant la centrifugation sur une plateforme support lorsqu'elle est montée dans l'une d'une pluralité de positions sur ladite plateforme support.

2. Procédé selon la revendication 1, ladite étape de séparation par centrifugation étant effectuée avec ladite pluralité de moules creux retenus sur ladite plateforme de construction.

3. Procédé selon la revendication 1 ou 2, chaque dite pluralité de moules creux comprenant en outre une grille, la grille étant formée dans ladite cavité creuse et la supportant, ladite grille se trouvant sur ladite plateforme de construction, et éventuellement au moins 30 pour cent du volume total dudit moule creux étant occupé par ladite cavité creuse.

4. Procédé selon l'une quelconque des revendications précédentes, ladite plateforme de construction comprenant une feuille de décollement (61) collée à celle-ci, ladite pluralité de moules creux étant collée à ladite feuille de décollement.

5. Procédé selon la revendication 4, ladite étape de durcissement supplémentaire (c) étant effectuée par :
(c1) séparation de ladite feuille de décollement de ladite plateforme de construction, lesdits moules creux étant retenus sur ladite feuille de décollement ; et puis
(c2) durcissement supplémentaire desdites parties inférieures (y compris lesdites cavités creuses) en éclairant lesdites parties inférieures avec de la lumière ultraviolette à travers ladite feuille de décollement ; et puis
(c3) séparation de chaque dit moule creux de ladite feuille de décollement.

6. Procédé selon la revendication 5, ledit durcissement supplémentaire de ladite pluralité de moules creux étant effectué simultanément, éventuellement ledit durcissement supplémentaire de ladite partie de surface externe et de ladite partie inférieure de chaque dite pluralité de moules étant effectué simultanément.

7. Procédé selon l'une quelconque des revendications précédentes, lesdits appareils dentaires comprenant des aligneurs orthodontiques, des dispositifs de retenue orthodontiques, des attelles orthodontiques, des protège-dents pour la nuit, des plateaux de blanchiment ou de blanchissement dentaire ou une combinaison de ceux-ci.

8. Procédé selon l'une quelconque des revendications précédentes :
au moins une ou chaque dite arcade ou un ou chaque dit moule comportant des première et seconde parties arrière opposées (40, 41), une partie avant (42) et une paire de parties latérales opposées (43, 44) entre elles ;
ladite cavité s'étendant de ladite première partie arrière à ladite seconde partie arrière à travers ladite partie avant et lesdites parties latérales opposées ;
au moins l'une ou chacune desdites parties latérales et ladite partie avant comprenant au moins une ouverture de drainage, les ouvertures de drainage se trouvant de préférence sur la surface buccale B de ladite arcade ; et
ladite étape de séparation par centrifugation (b) comprenant l'écoulement de ladite résine résiduelle à travers ladite cavité et lesdites ouvertures de drainage.

9. Procédé selon la revendication 8, lesdites ouvertures de drainage présentant un diamètre moyen de 0,6 à 1,3 millimètre et étant espacées les unes des autres d'une moyenne de 2 à 8 millimètres.

10. Moule creux (21, 31, 31') produit par fabrication additive à partir d'une résine polymérisable, ledit moule comportant une partie de surface externe (22, 32, 32') conçue sous la forme d'une arcade dentaire et une partie inférieure comportant une cavité creuse (23, 33, 33') en son sein, ledit moule comportant une pluralité d'ouvertures de drainage de résine résiduelle (35, 35') formées en son sein, chaque ouverture de drainage communiquant entre ladite cavité creuse et ladite partie de surface externe ou s'étendant entre elles,
ladite hauteur de ladite cavité étant :
(i) sensiblement la même dans toute ladite arcade, ou
(ii) profilée à travers ladite arcade dans une configuration permettant de faciliter l'écoulement de la résine résiduelle hors de ladite cavité creuse pendant la centrifugation sur une plateforme support lorsqu'elle est montée dans l'une d'une pluralité de positions sur ladite plateforme support.

11. Moule selon la revendication 10, ladite partie de surface externe comportant une partie supérieure (22u, 32u, 32u') et une partie latérale (22s, 32s, 32s'), et ladite partie inférieure comportant une partie de surface de base de préférence plane (24, 34'), lesdites ouvertures de drainage de résine résiduelle étant formées dans ladite partie latérale.

12. Moule selon la revendication 10, comprenant en outre une grille formée d'entretoises (81), la grille étant formée dans ladite cavité creuse et la supportant, éventuellement au moins 30 pour cent du volume total dudit moule creux étant occupé par ladite cavité creuse.

13. Moule selon la revendication 12, lesdites entretoises comportant des parties de surface supérieure, inférieure et latérale, lesdites parties de surface inférieure étant coplanaires avec ladite partie de surface de base, et :
lesdites parties de surface supérieure étant conçues pour favoriser le drainage de la résine résiduelle ; et/ou
lesdites entretoises comprenant des ouvertures de drainage de résine formées en elles.

14. Moule selon l'une quelconque des revendications 10 à 13 :
ladite arcade comportant des première et seconde parties arrière opposées (40, 41), une partie avant (42) et une paire de parties latérales opposées (43, 44) entre elles ;
ladite cavité s'étendant de ladite première partie arrière à ladite seconde partie arrière à travers ladite partie avant et lesdites parties latérales opposées ; et
chacune desdites parties latérales et ladite partie avant comprenant au moins une ouverture de drainage, les ouvertures de drainage se trouvant de préférence sur la surface buccale B de ladite arcade.

15. Moule selon l'une quelconque des revendications 10 à 14, lesdites ouvertures de drainage présentant un diamètre moyen de 0,6 à 1,3 millimètre et étant espacées les unes des autres d'une moyenne de 2 à 8 millimètres.
